# EUROPEAN PATENT SPECIFICATION

(11) **EP 2 971 448 B1**
(45) Date of publication and mention of the grant of the patent: **18.10.2017**
(21) Application number: 14719411.2
(22) Date of filing: 11.03.2014
(51) Int. Cl.: E21B 19/00

(54) **FLUID CONDUIT CONNECTION SYSTEM**
FLUIDLEITUNGSVERBINDUNGSSYSTEM
SYSTÈME DE LIAISON DE CONDUIT DE FLUIDE

(30) Priority: 11.03.2013 US 201361776348 P
(43) Date of publication of application: 20.01.2016
(60) Divisional application: 17176134.9
(73) Proprietor: LORD Corporation, Cary, NC 27511 (US)
(72) Inventor: SMID, John P., Fairview, Pennsylvania 16415 (US); OWENS, Jonathan M., Chapel Hill, North Carolina 27517 (US); CUNE, Gregg, Conroe, Texas 77304 (US)
(74) Representative: Murgitroyd & Company
(86) International application number: PCT/US2014/023186
(87) International publication number: WO 2014/164673

(56) References cited:
- US-A- 4 708 525
- US-A1- 2003 019 625
- US-A1- 2007 201 955
- US-B2- 7 914 234

## Description

### CROSS-REFERENCE TO RELATED APPLICATIONS

The present application claims priority to U.S. Provisional Patent Application No. 61/776,348 filed on March 11, 2013 by John P. Smid, et al., entitled "FLUID CONDUIT CONNECTION SYSTEM".

### BACKGROUND

Offshore hydrocarbon production systems may comprise a riser, such as a steel catenary riser (SCR), that serves as a fluid conduit between a subsea hydrocarbon source and a structure located relatively shallower than the riser. In some cases, the structure may comprise a stationary platform supported by a sea floor, a floating platform, a ship, and/or any other structure located relatively closer to a surface of the water as compared to the fluid conduit. In some cases, the weight of the riser may be supported by the relatively more shallow structure. In some cases, risers and the structures that support risers may be moved relative to each other by water currents, vortex induced vibrations, waves, and/or a variety of other perturbing forces. While riser support bearings may be utilized to transfer weight of the riser to the structure while also allowing some level of flexibility and/or relative movement between the riser and the structure, some riser support bearings achieve the above-described flexibility by allowing translational movement between components of the riser support bearings. In some cases, an interface between the components that move relative to each other may at least partially define a fluid flow path of the riser support bearing. In some cases, the fluid received from the riser may escape the fluid flow path through a leak path between the components that move relative to each other. Such leakage of fluid may result in an environmental concern and/or may cause deterioration of riser support bearing elements.

U.S. Patent No. 7,914,234 B2 discloses a tendon top connector for a moored, floating structure such as a tension leg platform, a tension leg buoy or the like has a bowl-shaped extension on the member which transfers the tension of the tendon to the flex connector. This patent discloses that a dome-shaped structure at least partially surrounds the bowl-shaped extension but is spaced apart from it to permit at least some rotational movement of the connector. The dome-shaped structure may be attached by clamps or other mounting means to a flange member affixed to the tendon porch. According to the patent disclosure, this arrangement provides a load path when the tendon top connector is reverse loaded that extends from the tendon length adjustment joint, through slips, through the bowl-shaped extension, through the dome-shaped structure, through the segmented clamps, and finally into a flange attached to the tendon porch. In this way, detachment of the tendon top connector is prevented if a reverse load is applied such as may occur during extreme metocean conditions.

Closest prior art document US 2003/0019625 A1 discloses the preamble of the independent claims.

### SUMMARY

In some embodiments of the disclosure, a fluid conduit connection system is disclosed as comprising a bearing assembly comprising a bearing pipe comprising a fluid flow path and a bearing element stack located exterior to the bearing pipe and disposed substantially annularly about the bearing pipe, wherein the bearing element stack is configured to receive a compressive force from the bearing pipe and wherein the bearing element stack is configured to allow rotation of the bearing pipe about a center of rotation of the bearing assembly.

In other embodiments of the disclosure, a fluid conduit connection method is disclosed as comprising providing a bearing pipe comprising a continuous inner wall that defines a flow path, providing a tension force to a tension end of the bearing pipe, disposing at least one bearing element stack external to the bearing pipe and annularly about the bearing pipe, and transferring at least a portion of the tension force to the at least one bearing element stack, wherein the bearing pipe is allowed to move about a center of rotation as a function of asymmetrical compression of the at least one bearing element stack.

In yet other embodiments of the disclosure, a hydrocarbon production system is disclosed as comprising a fluid conduit, a fluid system, and a fluid conduit connection system comprising an annular bearing element stack, the fluid conduit connection system being configured to (1) connect the fluid conduit in fluid communication with the fluid system and (2) provide a flexible connection between the fluid conduit and the fluid system.

In still other embodiments of the disclosure, a device is disclosed as comprising a fluid conduit comprising a central axis and a fluid conduit flange associated with an end of the fluid conduit and a split flange having an assembled configuration and a disassembled configuration, the split flange comprising a first arcuate portion comprising a body and two arcuate protrusions extending circumferentially from the body, and a second arcuate portion comprising a body and two arcuate protrusions extending circumferentially from the body, wherein when the split flange is in the assembled configuration, the arcuate protrusions of the first arcuate portion at least partially longitudinally overlap the arcuate protrusions of the second arcuate portion and the split flange substantially encircles the fluid conduit, wherein when the split flange is in the disassembled configuration, the split flange does not substantially encircle the fluid conduit, and wherein the split flange is moveable between the assembled configuration and the disassembled configuration by moving at least one of the first arcuate portion and the second arcuate portion radially relative to the central axis of the fluid conduit.

In other embodiments of the disclosure, a method of disassembling a bearing assembly is disclosed as comprising decoupling a split flange of a bearing assembly from a fluid conduit of the bearing assembly and removing the fluid conduit from the bearing assembly by displacing the fluid conduit through a central bore of a bearing element stack of the bearing assembly.

### BRIEF DESCRIPTION OF THE DRAWINGS

For a more complete understanding of the present disclosure and the advantages thereof, reference is now made to the following brief description, taken in connection with the accompanying drawings and detailed description:
Figure 1 is an orthogonal side view of an hydrocarbon production system according to an embodiment of the disclosure;
Figure 2 is an oblique top view of a fluid conduit connection system of the hydrocarbon production system of Figure 1;
Figure 3A is an oblique top view of a bearing assembly of the fluid conduit connection system of Figure 2;
Figure 3B is an oblique bottom view of the bearing assembly of Figure 3A;
Figure 3C is an orthogonal top view of the bearing assembly of Figure 3A;
Figure 4 is an orthogonal cross-sectional front view of the bearing assembly of Figure 3A taken along line 4-4 of Figure 3C;
Figure 5A is an oblique exploded top view of a portion of the bearing assembly of Figure 3A;
Figure 5B is an oblique exploded bottom view of the portion of the bearing assembly of Figure 5A;
Figure 6 is an oblique top view of a bearing assembly including an exploded view of a split flange according to an embodiment of the disclosure;
Figure 7 is an orthogonal cut-away side view of a portion of an alternative bearing assembly according to another embodiment the disclosure; and
Figure 8 is a flowchart of a method of disassembling a fluid conduit connection system (FCCS).

### DETAILED DESCRIPTION

In some cases, it may be desirable to provide a fluid conduit connection system (FCCS) that is free of internal seals and/or potential leak paths while also being suitable for both supporting weight of a fluid conduit and providing a movable connection between the fluid conduit and another component or system. In some embodiments of the disclosure, an FCCS is provided to allow the above-described connection by providing a closed fluid flow path through a high-capacity laminate (HCL) elastomeric bearing assembly. In some embodiments, the closed fluid flow path may be provided by disposing a bearing pipe comprising a continuous inner wall through an aperture of the bearing assembly.

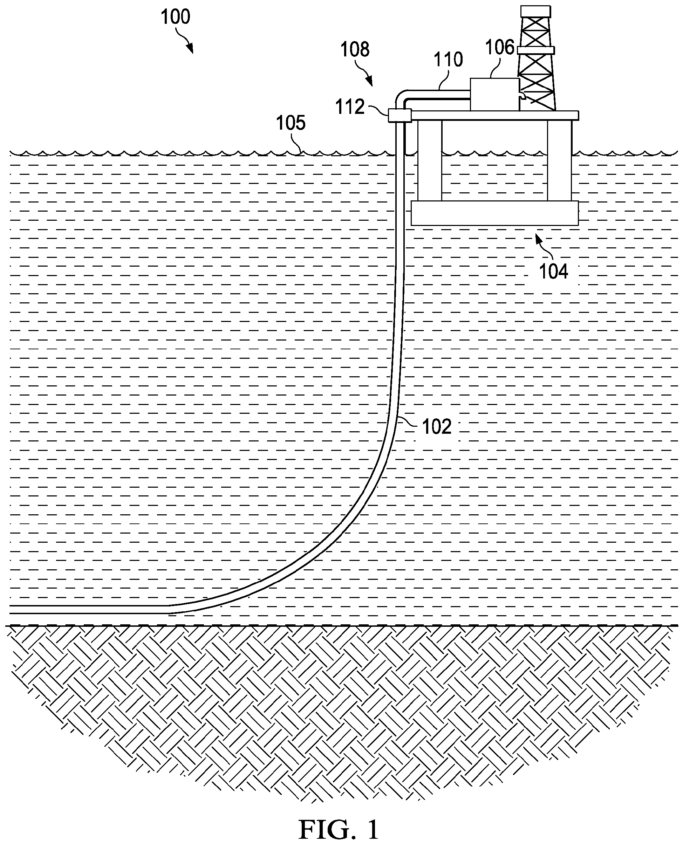

Referring to Figure 1, an orthogonal side view of a hydrocarbon production system 100 according to an embodiment of the disclosure is shown. Most generally, the hydrocarbon production system 100 comprises a fluid conduit 102, a support structure 104 configured to support at least a portion of the weight of the fluid conduit 102, a fluid system 106 to which the fluid conduit 102 is selectively joined to in fluid communication, and a fluid conduit connection system (FCCS) 108 that connects the fluid conduit 102 to the fluid system 106. In some embodiments, the fluid conduit 102 may comprise a riser, such as, but not limited to, a steel catenary riser. In some embodiments, the support structure 104 may be a buoyant hydrocarbon production rig or platform, a freestanding hydrocarbon production rig, a ship, a helicopter, and/or any other structure that may be located and/or moved relative to the fluid conduit 102 in a manner that may cause a tensile force along the fluid conduit 102 when the fluid conduit 102 is connected to the fluid system 106. In some cases, the above-described tensile force may be partially attributable to a weight of the fluid conduit 102 and/or fluids within the fluid conduit 102. In some cases, the above-described tensile force may be partially attributable movement of the fluid conduit 102 relative the support structure 104. In some cases, the FCCS 108 may be carried, supported, and/or restrained by the support structure 104 and the FCCS 108 may be configured to transfer the above-described tensile force to the support structure 104 while also allowing movement of the fluid conduit 102 relative to at least one of the support structure 104 and the fluid system 106.

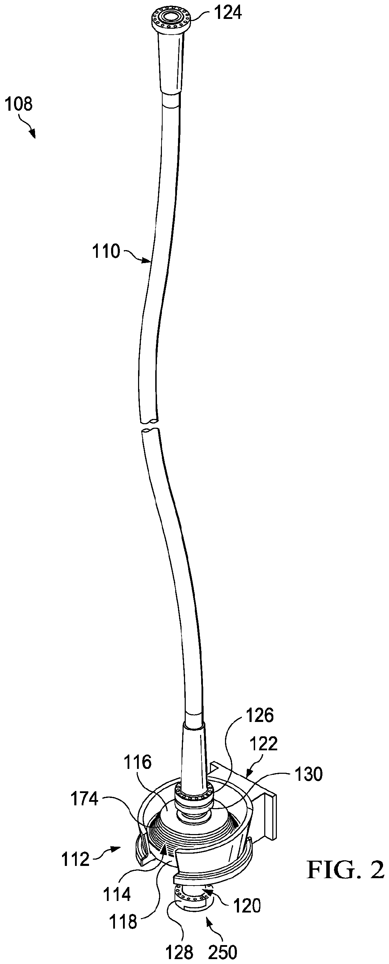

Referring to Figure 2, an oblique top view of an FCCS 108 according to an embodiment of the disclosure is shown. In this embodiment, the FCCS 108 generally comprises a flexible conduit 110 and a bearing assembly 112 connected in fluid communication with the flexible conduit 110. Bearing assembly 112 may generally comprise a bearing element stack 114 captured between an upper or inner member 116 and a lower or outer member 118, a bearing pipe 120, and a bracket 122. Flexible conduit 110 may comprise a fluid system connection end 124 and a bearing assembly connection end 126. Bearing pipe 120 may comprise a tension end 128 and a flexible conduit connection end 130. In some embodiments, FCCS 108 may be configured to operate in environments ranging in temperature from about -10ºC to about 200ºC. In this embodiment, tension end 128 of bearing pipe 120 includes a split flange 250, which will be described in greater detail below. In the embodiment of Figure 2, bearing assembly 112 is shown disposed above the waterline 105. However, in other embodiments, the bearing assembly 112 may be disposed below the water line. In this embodiment, bearing assembly 112 may be coupled directly to support structure 104.

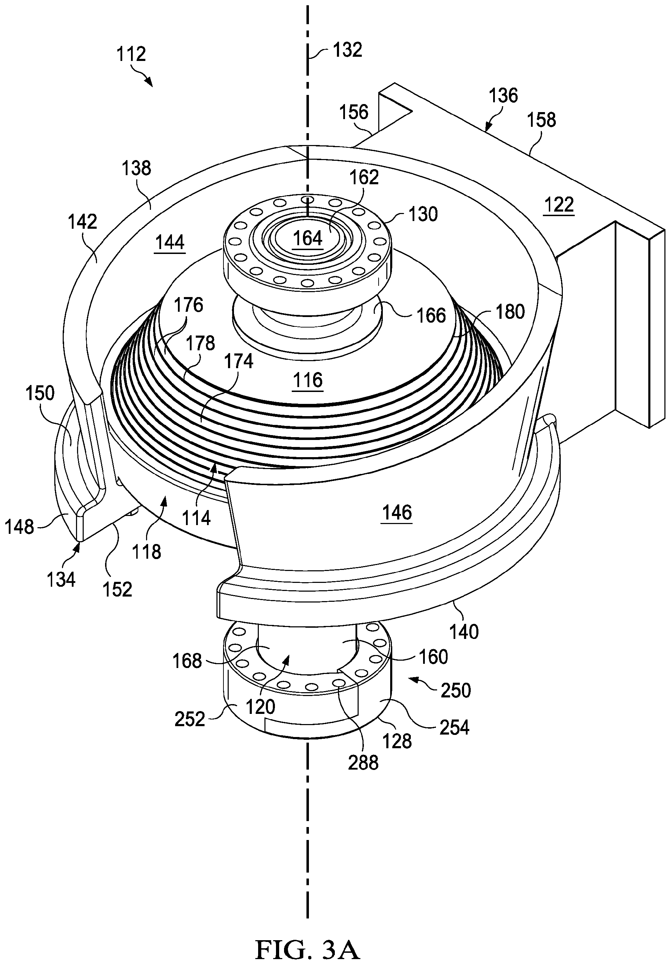

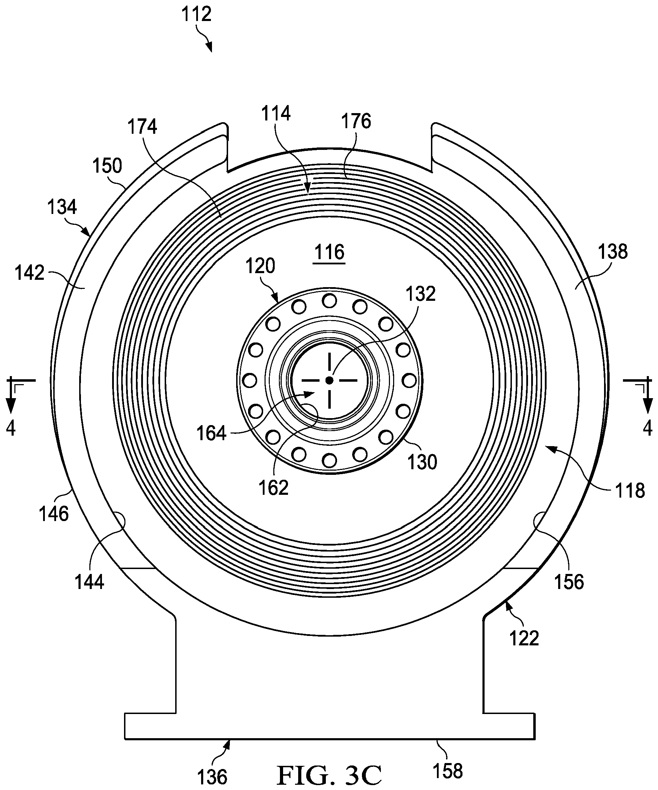

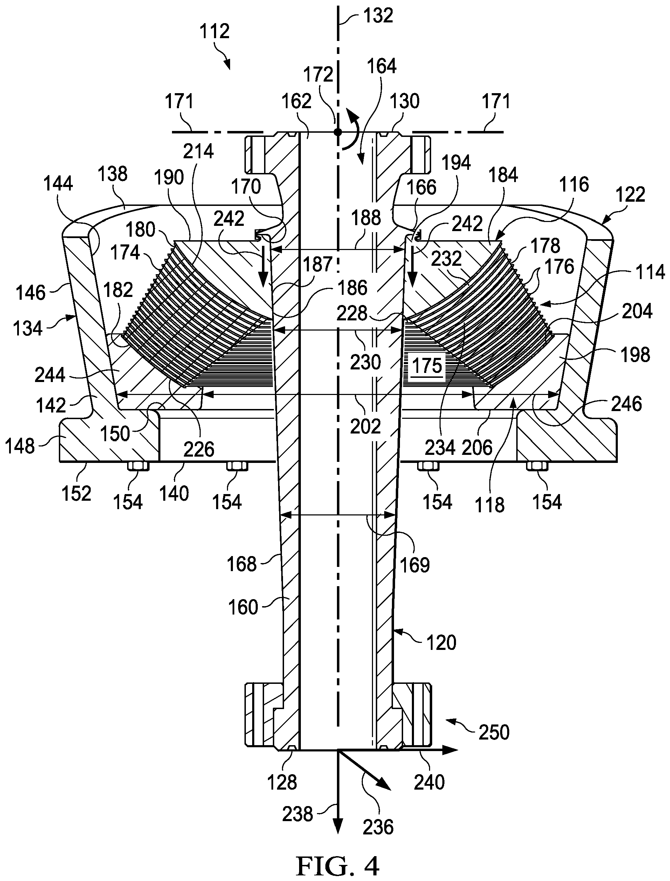

Referring now to Figures 3A-3C and Figure 4, an oblique top view, an oblique bottom view, an orthogonal top view, and an orthogonal cross-sectional front view of the bearing assembly 112 are shown, respectively. In this embodiment, bearing assembly 112 may be described as comprising a central axis 132 shared by or coincident with central axes of bracket 122, bearing pipe 120, and bearing element stack 114. Bracket 122 may be configured to support the weight of the remainder of the FCCS 108 and any other tension applied to the tension end 128 of the bearing pipe 120 in a direction generally away from the flexible conduit connection end 130.

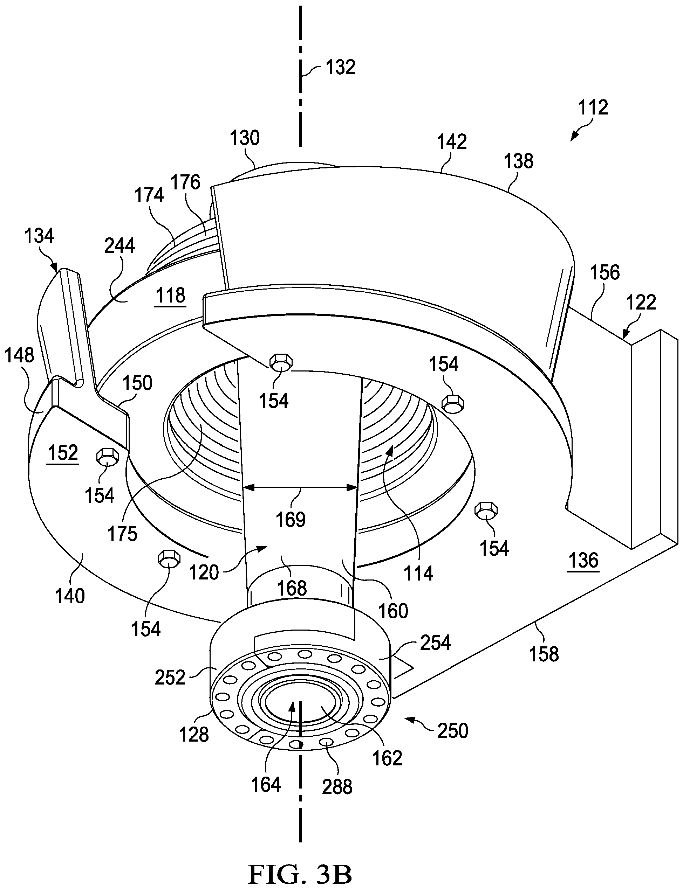

In this embodiment, bracket 122 may be described as generally comprising a bracket receiver 134 and a bracket mount 136. Bracket receiver 134 may comprise a receiver upper end 138 and a receiver lower end 140. Bracket receiver 134 may further comprise an annular wall 142 comprising a wall inner surface 144 and a wall outer surface 146. In this embodiment, bracket receiver 134 further comprises a floor plate 148 that extends both radially inward toward central axis 132 beyond the annular wall inner surface 144 and radially outward away from central axis 132 beyond the annular wall outer surface 146. The floor plate 148 may comprise an upper floor plate surface 150 and a lower floor plate surface 152. In some embodiments, a plurality of floor bolts 154 (see Figures 3B and 4) may extend through floor plate 148 and the floor bolts 154 may serve as jacking screws to decouple the outer member 118 from the bracket receiver 134. In this embodiment, bracket mount 136 may be described as comprising a radially inner mount end 156 and a radially outer mount end 158. The radially inner mount end 156 may be connected to the bracket receiver 134 while the radially outer mount end 158 may be configured for connection to the support structure 104.

Still referring to Figures 3A-3C and Figure 4, in this embodiment, bearing pipe 120 may comprise a tubular wall 160 having a bearing pipe inner surface 162 defining a flow path 164 extending through the bearing assembly 112. More specifically, the flow path 164 may extend through central apertures in each of the bearing element stack 114, inner member 116, and outer member 118. In this embodiment, bearing pipe 120 may further comprise a bearing pipe flange 166 extending radially outward from a generally frustoconical tubular wall outer surface 168 having a tubular wall outer surface central diameter 169. Because tubular wall outer surface 168 is generally frustoconical, the outer surface central diameter 169 may be tapered along central axis 132 such that diameter 169 is greater at bearing pipe flange 166 than at split flange 250. The bearing pipe flange 166 may comprise a flange lower surface 170 configured to selectively abut against the inner member 116. In an embodiment, tubular wall 160 may comprise a tubular wall outer diameter within a range of values of about 9" and about 12". However, in other embodiments, tubular wall 160 may comprise a tubular wall outer diameter within a range of values of about 9" to about 24". In an embodiment, bearing pipe 120 may be configured to operate at fluid pressures up to about 20,000 pounds per square inch (psi) (about 1,406 kilogram-force/square centimeter). As will be discussed further herein, bearing pipe 120 may rotate about a bearing assembly 112 center of rotation 172 that may lie coincident with the bearing assembly 112 central axis 132 and a plane 171 that extends laterally (relative to central axis 132) and which may be generally coincident with flexible conduit connection end 130. In some embodiments, an insulative material comprising a relatively low thermal conductivity may be disposed between the bearing pipe 120 and the bearing element stack 114. For example, a sleeve of mica which has relatively high strength, relative high stiffness, and relatively low thermal conductivity may be used to thermally insulate the bearing element stack 114 from the potentially very hot bearing pipe 120.

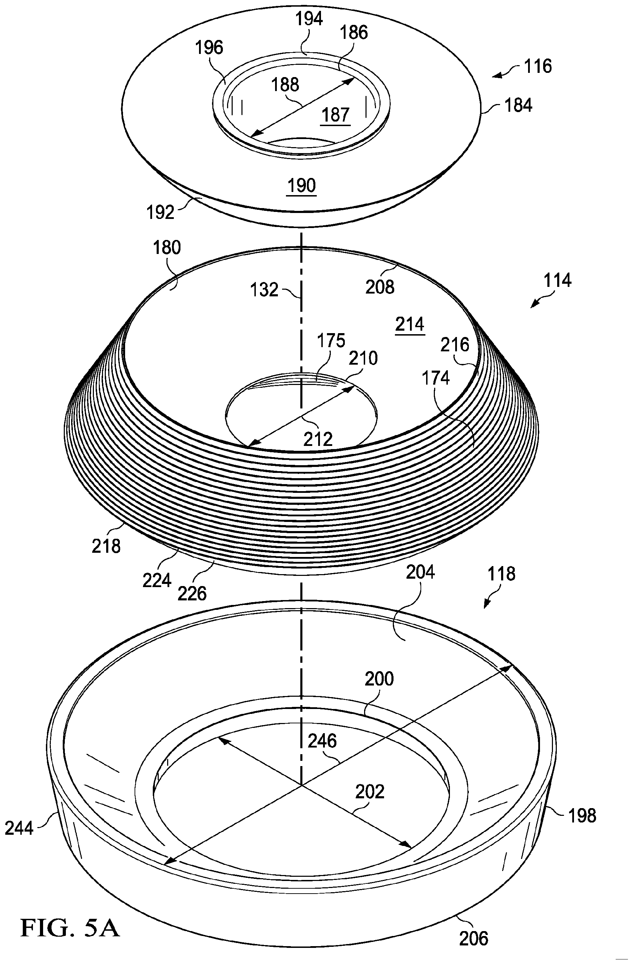

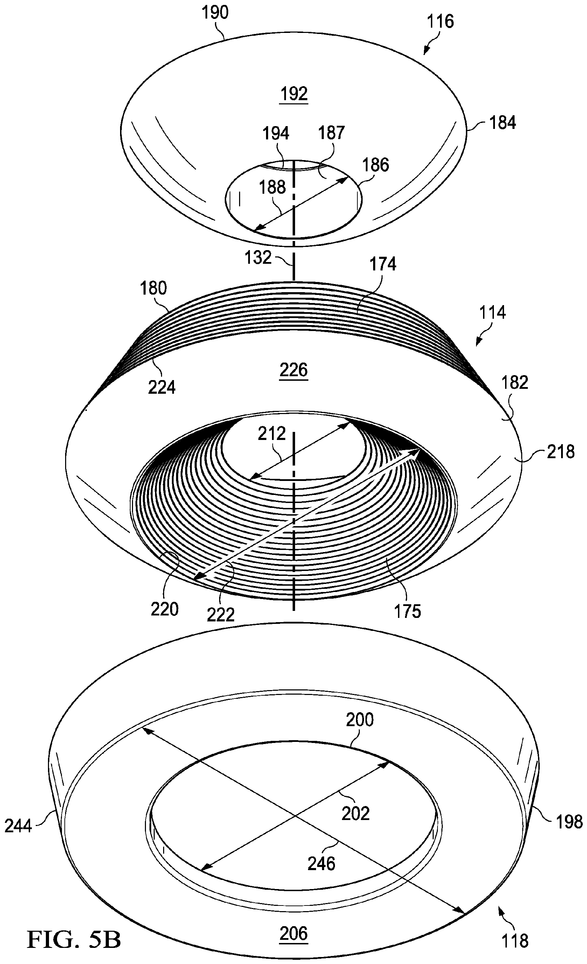

Referring now to Figures 5A and 5B, exploded oblique top and exploded oblique bottom views, respectively, of the bearing element stack 114, inner member 116, and outer member 118 are shown. In this embodiment, the bearing element stack 114 may comprise a bearing stack outer profile 174 and an inner profile 175, where profiles 174 and 175 may each be exposed to the ambient environment. The bearing element stack 114 may comprise a plurality of flexible elements 176, a plurality of intermediate shims 178 disposed between adjacent flexible elements 176, an upper bonding shim 180, and a lower bonding shim 182. When the bearing assembly 112 is assembled, the cooperation of the bearing element stack 114, inner member 116, and outer member 118 may generally allow limited rotation of the bearing pipe 120 about the center of rotation 172 in orbital-type movements about the center of rotation 172 and torsional rotation about the central axis of the bearing
pipe 120 and/or the bearing assembly 112 central axis 132 while the bracket 122 remains substantially stationary relative to the support structure 104. In some embodiments, the bearing element stack 114 may comprise no upper bonding shim 180 so that flexible elements 176 may interface directly with the inner member 116. In some embodiments, the bearing element stack 114 may comprise no lower bonding shim 182 so that flexible elements 176 may interface directly with the outer member 118. The flexible elements 176 may be coated by materials different from the material of the base and/or primary flexible element material to impart a greater chemical resistance to the bearing element stack 114. For example, when the flexible elements 176 comprise nitrile, rubber, and/or other elastomers, the flexible elements 176 may be at least partially coated by a high performance coating (HPC) comprising hydrocarbon fluid resistive properties. Similarly, intermediate shims 178, upper bonding shim 180, and lower bonding shim 182 may be coated by materials different from the base and/or primary shim 178, 180, 182 materials to impart greater chemical and/or corrosion resistance to the bearing element stack 114. For example, the shims 178, 180, 182 may be coated by paint, adhesive, ceramics, and/or metallized coatings.

In this embodiment, inner member 116 may comprise an inner member body 184 having a central bore 186 with a generally frustoconical inner member inner surface 187 having an inner member central bore diameter 188. The inner member 116 may further comprise a substantially flat inner member upper surface 190 and a substantially convex inner member lower surface 192. Central bore diameter 188 of frustoconical central bore 186 may be tapered along central axis 132 such that central bore diameter 188 is greater at inner member upper surface 190 than at inner member lower surface 192. Inner member 116 may further comprise an inner flange 194 that projects upward from inner member upper surface 190 and which may be disposed adjacent to inner member central bore 186.

The frustoconical inner member inner surface 187 of inner member 116 may be configured for selective abutment with the tubular wall outer surface 168 of bearing pipe 120 when bearing pipe 120 is placed in tension by a force applied to the tension end 128 of the bearing pipe 120. The inner member inner flange 194 may also be configured for selective abutment with the bearing pipe flange lower surface 170 when the bearing pipe 120 is placed in tension by a force applied to the tension end 128 of the bearing pipe 120. However, bearing pipe flange 166 may be configured to transmit only enough of a seating force 242 (see Figure 4) between bearing pipe flange lower surface 170 and inner member inner flange 194 in order to seat or wedge inner member inner surface 187 against tubular wall outer surface 168. The physical engagement between frustoconical surfaces 187 and 168 via the seating force may be configured to resist a vertical force (e.g., a force in the direction opposite of the tension force) along bearing pipe 120 that may act to unseat bearing pipe 120 from inner member 116. In this embodiment, the frustoconical surfaces 187 and 168 may act as the primary load path for a tension force applied to the tension end 128 of bearing pipe 120.

In this embodiment, outer member 118 may generally comprise an outer member body 198 comprising an outer member central bore 200 having an outer member central bore diameter 202. The outer member body 198 may comprise a substantially concave outer member upper surface 204 and a substantially flat outer member lower surface 206. In this embodiment, the inner member central bore diameter 188 may generally be smaller in size than the outer member central bore diameter 202. Outer member 118 may further comprise a generally frustoconical outer member outer surface 244 having a tapered outer diameter 246 that is greater at outer member upper surface 204 than at outer member lower surface 206.

In this embodiment, inner member 116 and outer member 118 may be formed from low alloy steel such as steel alloys 4130 and 4140 and/or any other suitable material. In this embodiment, upper bonding shim 180 and lower bonding shim 182 may be configured as interfaces between the bearing element stack 114 and inner member 116 and outer member 118 to reduce manufacturing complexity of bearing assembly 112 and improve reparability of bearing assembly 112. Upper bonding shim 180 and lower bonding shim 182 may be formed from a steel alloy, such as alloys 4130 and 4140, stainless steel, and/or any other suitable material. Upper bonding shim 180 and lower bonding shim 182 may be bonded to adjacent flexible elements 176 to reduce relative translational movement between the adjacent flexible elements 176 and the upper bonding shim 180 and the lower bonding shim 182. Upper bonding shim 180 may comprise an upper bonding shim body 208 comprising an upper bonding shim central bore 210 having a diameter 212. The upper bonding shim body 208 may comprise a substantially concave upper bonding shim upper surface 214 and a substantially convex upper bonding shim lower surface 216. The lower bonding shim 182 may comprise a lower bonding shim body 218 comprising a central bore 220 having a diameter 222. The lower bonding shim body 218 may comprise a substantially concave lower bonding shim upper annular surface 224 and a substantially convex lower bonding shim lower surface 226.

Referring now to Figures 4, 5A, and 5B, the bearing element stack 114 may be configured to pliably deform in response to compression of the bearing element stack 114 between the upper bonding shim 180 and the lower bonding shim 182. In some cases, the bearing element stack 114 may deform by longitudinally compressing and/or radially expanding (relative to central axis 132) in response to being compressed between the upper bonding shim 180 and the lower bonding shim 182. In this embodiment, each flexible element 176 may comprise a flexible element central bore 228 having a flexible element central bore diameter 230, a substantially concave upper surface 232 and a substantially convex lower surface 234. The flexible element central bore diameter 230 of the flexible elements 176 may increase in size moving from higher to lower while maintaining a substantially constant annular thickness and/or width of the flexible elements 176.

In this embodiment, flexible elements 176 may comprise elastomeric materials. The bearing element stack 114 may comprise a high capacity laminate (HCL) bearing manufactured by LORD Corporation located at 111 Lord Drive Cary, NC 27511. It will be appreciated that because fluids which may contain hydrogen sulfide and other chemicals will not leak onto the flexible elements 176 via a leak path through the bearing pipe 120, a wide variety of elastomeric or pliable materials may be used in forming the bearing element stack 114 without concern of premature degradation of the bearing element stack 114 due to a fluid leak from within the bearing pipe 120. More specifically, because the fluid seals that join the bearing pipe 120 to the fluid conduit 102 and flexible conduit 110 do not allow movement at the sealing junctions between the bearing pipe 120 and the fluid conduit 102 and/or flexible conduit 110, there is reduced opportunity for movement to cause wear at the seals that may lead to seal failure and potential exposure to hydrogen sulfide, carbon dioxide, hydrocarbon fluids, natural gas, acidification injection fluids, injected solvents, and/or incrustation removal fluids. Further, because the bearing element stack 114 is not enclosed in a pressurized housing the bearing stack outer profile 174 and inner profile 175 may be easily visually inspected from above and below, respectively. Also, because the bearing element stack 114 is generally exposed to the environment, the heat generated by flexure of the bearing element stack 114 may be readily dissipated to the environment (i.e. surrounding air and/or water) thereby allowing the bearing element stack 114 to comprise relatively stronger elastomeric materials than could be used in an enclosed housing. Similarly, the reduced potential for leaks allows construction of the bearing element stack to comprise metals which may be stronger but otherwise are not as resistant to degradation in response to exposure to one or more of the above-described leaked fluids. Still further, the bearing assembly 112 overall weight may be low because it requires no pressurized housing to enclose the bearing element stack 114.

Referring to Figure 4, in operation, the bearing pipe 120 tension end 128 may be coupled to a fluid conduit 102, such as a steel catenary riser, in a manner that provides a tensioning force 236 having a longitudinal force component 238 and a lateral force component 240 to the bearing pipe 120. Tensioning force 236 may be transferred from bearing pipe 120 to inner member 116 via physical engagement between the tubular wall outer surface 168 and the inner member 116 inner surface 187. Because of the angled physical engagement between frustoconical surfaces 168 and 187, the lateral force component 240 may be transferred from bearing pipe 120, through inner member 116 and the bearing element stack 114, thereby resulting in asymmetrical deformation of the bearing element stack 114 and the above-described movement of the bearing pipe 120 about the center of rotation 172. Tension force 236 may be transferred from the bearing element stack 114 to the outer member 118 which may then transfer substantially all forces to the support structure 104 via the bracket 122.

In some embodiments, the FCCS 108 may allow for easy visual inspection as a function of the bearing element stack 114 not being fully enclosed and/or obscured from view. Further, in some embodiments, bearing pipes 120 of different sizes may be accommodated by the FCCS 108 by alternating a size of the inner member 116 and/or optionally portions of the bearing element stack 114 to create a greater diameter central aperture.

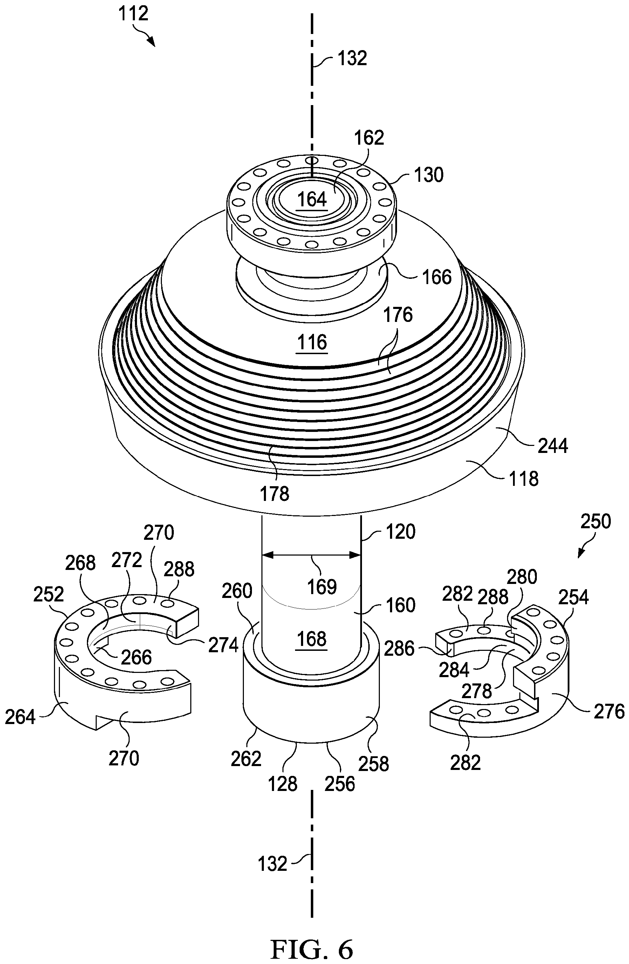

Referring now to Figure 6, an oblique top view of bearing assembly 112 including an exploded view of split flange 250 is shown. In this embodiment, split flange 250 may generally comprise a first arcuate portion 252 and a second arcuate portion 254, where first arcuate portion 252 and second arcuate portion 254 may be configured to couple about bearing pipe 120 at tension end 128. Bearing pipe 120 may comprise a lower bearing pipe flange 256 extending radially outward from the tubular wall outer surface 168 at tension end 128. Lower bearing pipe flange 256 may comprise a generally cylindrical lower pipe flange outer surface 258, an annular lower pipe flange upward facing surface 260 and an annular lower pipe flange downward facing surface 262. In an embodiment, lower pipe flange downward facing surface 262 may be configured to interface with a standard American Petroleum Institute (API) 6A flange geometry. In other embodiments, lower pipe flange downward facing surface 262 may be configured to interface with other flange geometries.

In this embodiment, the split flange first arcuate portion 252 may generally comprise a body 264 having a first arcuate lower inner surface 266 and a first arcuate upper inner surface 268 disposed axially above the first arcuate lower inner surface 266 and extends radially inward from first arcuate lower inner surface 266. First arcuate portion 252 may further comprise first arcuate protrusions 270 that extend circumferentially from body 264 and a first arcuate downward facing flanged surface 272. In an embodiment, a cut 274 may extend partially into first arcuate upper inner surface 268 at a terminal end of each the first arcuate protrusion 270.

In this embodiment, split flange second arcuate portion 254 may generally comprise a body 276 having a second arcuate lower inner surface 278 and a second arcuate upper inner surface 280 disposed axially above second arcuate lower inner surface 278 and extends radially inward from second arcuate lower inner surface 278. Second arcuate portion 254 may further comprise two second arcuate protrusions 282 that extend circumferentially from body 276 and a second arcuate downward facing flanged surface 284. In an embodiment, a chamfer 286 may extend partially into the second arcuate lower inner surface 278 at a terminal end of each of the second arcuate protrusions 282.

Referring now to Figures 3A, 3B and 6, split flange 250 may include a disassembled configuration as shown in Figure 6 and an assembled configuration as shown in Figures 3A and 3B. In an embodiment, when in the assembled configuration, first arcuate protrusions 270 and second arcuate protrusions 282 may overlap such that one or more of a plurality of holes 288 extending through first arcuate protrusions 270 and 282 may axially align. First arcuate portion 252 and second arcuate portion 254 may be selectively coupled together about lower bearing pipe flange 256 via a bolt or other generally cylindrical body (not shown) disposed in one or more of the plurality of holes 288. In the assembled configuration, split flange 250 may be configured to selectively abut against the lower pipe flange upward facing surface 260 of lower bearing pipe flange 256.

In an embodiment, first arcuate downward facing flanged surface 272 and second arcuate downward facing flanged surface 284 may be configured for selective abutment with the annular lower pipe flange upward facing surface 260 when the bearing pipe 120 is placed in tension by a force applied to the tension end 128 of the bearing pipe 120. In this embodiment, cuts 274 and chamfers 286 may be configured to provide radial clearance so as to allow first arcuate portion 252 and second arcuate portion 254, respectively, to disengage from lower bearing pipe flange 256 via displacing laterally outward from central axis 132, as shown in Figure 6.

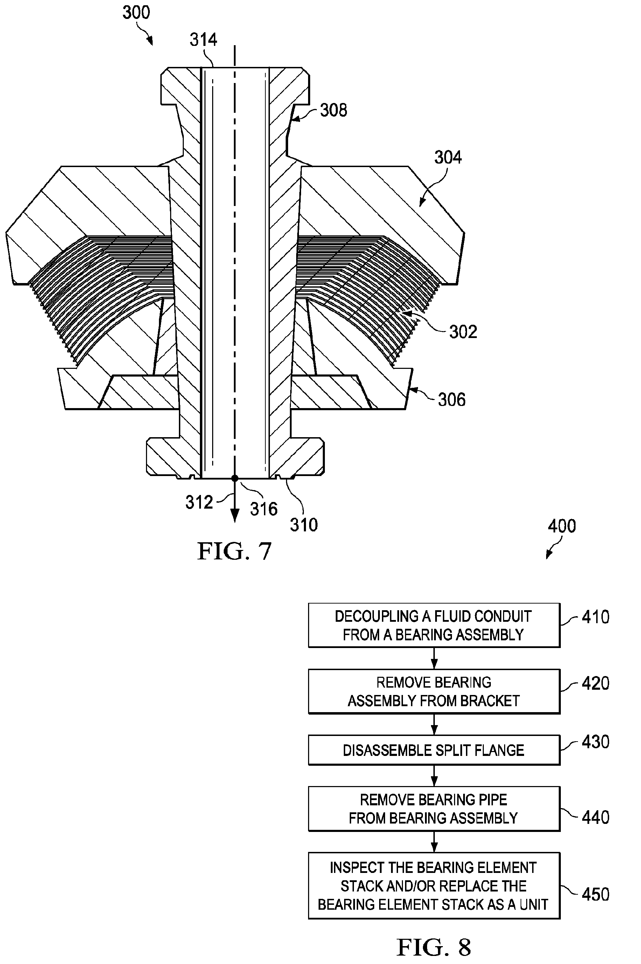

Referring now to Figure 7, an orthogonal cut-away view of a portion of an alternative embodiment of a bearing assembly 300 is shown. The bearing assembly 300 may comprise a bearing element stack 302 captured between an outer member 304 and an inner member 306. The bearing assembly 300 may further comprise a bearing pipe 308 that comprises a tension end 310 configured to receive a tension force, such as tension force 312, from a fluid conduit, such as, but not limited to a catenary riser. As compared to the bearing assembly 112, the directionality of the concave and convex features of each of the bearing element stack 302, the outer member 304, and the inner member 306 are reversed relative to a direction of a source of a tension load applied to the bearing pipe 308. In this embodiment, a flexible conduit, such as, but not limited to, a flexible conduit 110 may be connected to the pipe end 314. Additionally, as compared to the bearing assembly 112, a center of rotation 316 of the bearing assembly 300 is located nearer the tension end 310 rather than nearer the pipe end 314.

In yet other alternative embodiments, the lower members (outer member 118 and inner member 306) may be supported by a platform floor of a rig rather than by the above-described bracket. In some embodiments, the upper members (inner member 116 and outer member 304) may be bolted or otherwise fastened to the bearing pipes. In some embodiments one or more components of the fluid conduit connection systems disclosed herein may be disposed within a body of water, and as a result, may dissipate heat to the body of water. In some embodiments, installing the fluid conduit connection systems does not require significant preloading and/or compression of the bearing assembly components. In some embodiments, by not having a potential leak path within the bearing assembly, relatively higher working pressure may be achieved within the bearing assembly without causing fluid leakage from the bearing assembly. In some embodiments, the bearing assembly may allow a bearing pipe to rotate within a cone of rotation of up to about 25 degrees. In some embodiments, the bearing pipe outer diameters may range from about 4 inches (about 10 centimeters) outer diameter to about 25 or more inches (about 63 or more centimeters) outer diameter. In some embodiments, the fluid conduit connection systems may be able to withstand tensile forces of up to about 5,000-11,000 kips (about 22,241- 48,930 KiloNewtons). In some embodiments, the flexible conduits may comprise carbon fiber and/or composite materials.

As used herein, first member encompasses inner member 116 of the embodiment illustrated in Figures 1-6. Additionally, as used herein, first member encompasses outer member 304 of the embodiment of illustrated in Figure 7. Similarly, as used herein, second member encompasses outer member 1 18 of the embodiment illustrated in Figures 1 -6. Additionally, as used herein, second member encompasses inner member 306 of the embodiment of illustrated in Figure 7.

Referring now to Figure 8, a block diagram depicting a method 400 of disassembling a FCCS, such as FCCS 108, is shown. The method may begin at block 410 by decoupling a fluid conduit from a bearing assembly. In an embodiment, decoupling a fluid conduit from a bearing assembly may comprise disengaging and/or removing bolts or other fasteners coupling the fluid conduit to the bearing assembly. The bearing assembly may comprise a HCL elastomeric bearing assembly, such as the bearing assembly 112. The fluid conduit may comprise a flexible conduit, such as the flexible conduit 110. The FCCS may comprise a support structure configured to support at least a portion of the weight of the fluid conduit and a fluid system coupled to the fluid conduit, such as the support structure 104 of FCCS 108.

The method 400 may continue at block 420 where the bearing assembly may be removed from the bracket. Removing the bearing assembly from the bracket may generally comprise displacing the bearing assembly vertically and/or longitudinally along a central axis of the bearing assembly, such as central axis 132, and then laterally displacing the bearing assembly from the bracket. In an embodiment, removing the bearing assembly from the bracket may also comprise retrieving the bearing assembly top side (i.e., above the water line) to a surface vessel, such as an offshore hydrocarbon production rig or platform. In this embodiment, removing the bearing assembly may further comprise visually inspecting the bearing assembly for damage or wear.

In an embodiment, removing the bearing assembly from the bracket may comprise decoupling the bearing assembly from the bracket. The bracket may be disposed either above or below a water line and may be supported by a buoyant hydrocarbon production platform or other support structure, such as support structure 104. The bracket may be configured to support at least a portion of the weight of the FCCS and any other tension forced applied to the bearing assembly. In an embodiment, the bracket may generally comprise a bracket receiver and a bracket mount, such as bracket 122.

The method 400 may continue at block 430 where a split flange of the bearing assembly may be disassembled. The split flange may be coupled to a bearing pipe of the bearing assembly, such as bearing pipe 120. The split flange may comprise two arcuate portions coupled about a bearing pipe of the bearing assembly, such as first arcuate portion 252 and second arcuate portion 254 of split flange 250. Disassembling the split flange may further comprise removing a bolt or other fastener disposed at least partially within a hole extending axially through the split flange. In this embodiment, the bolt may extend through a first arcuate portion and a second arcuate portion of the split flange. The first and second arcuate portions may be displaced laterally from the bearing pipe relative to a central axis of the bearing assembly (shown in Figure 6).

The method 400 may continue at block 440 where a bearing pipe of the bearing assembly may be extracted or removed from the bearing assembly. In an embodiment, extracting the bearing pipe from the bearing assembly may comprise vertically or axially displacing the bearing pipe through a central bore of the bearing assembly along a central axis of the bearing assembly, such as central axis 132. The bearing pipe may comprise a lower bearing pipe flange, such as lower bearing pipe flange 256. In this embodiment, an outer surface of the lower pipe flange, such as lower pipe flange outer surface 258, may be configured such that it has a diameter that is the same size or smaller than a diameter of the central bore of the bearing assembly, allowing the lower pipe flange to be displaced axially through the central bore of the bearing assembly.

The method 400 may continue at block 450 where a bearing element stack, such as bearing element stack 114, may be inspected and/or replaced. In this embodiment, the method 400 may comprise replacing the bearing element stack 114 as a unit, reassembling the bearing assembly 112, and installing the bearing assembly 112 into a hydrocarbon production system 100 to at least partially form the FCCS 108. Reassembling the bearing assembly may comprise extending the bearing pipe 120 through the bearing element stack 114 and assembling a split flange 250 of the bearing assembly 112. Installing the bearing assembly 112 into the hydrocarbon production system 100 may comprise installing and coupling the bearing assembly 112 to the bracket 122 and coupling a flexible conduit 110 to the bearing assembly 112.

Other embodiments of the current invention will be apparent to those skilled in the art from a consideration of this specification or practice of the invention disclosed herein. Thus, the foregoing specification is considered merely exemplary of the current invention with the true scope thereof being defined by the following claims.

## Claims

1. A fluid conduit connection system (108), comprising:
a bearing assembly (112), including:
a bearing pipe (120) having a fluid flow path (164); and
a bearing element stack (114) located exterior to the bearing pipe (120) and disposed substantially annularly about the bearing pipe (120);
wherein the bearing element stack (114) is configured to receive a compressive force from the bearing pipe (120);
wherein the bearing element stack (114) is configured to allow rotation of the bearing pipe (120) about a centre of rotation (172) of the bearing assembly (112); and
wherein the bearing element stack (114) comprises:
a plurality of flexible elements (176); and
a plurality of intermediate shims (178) disposed between adjacent flexible elements (176),
**characterised in that** the bearing element stack (114) further comprises:
an upper bonding shim (180); and
a lower bonding shim (182).

2. The fluid conduit connection system (108) of claim 1, the bearing assembly (112) further comprising a first member (116, 304) disposed between the bearing pipe (120) and the bearing element stack (114).

3. The fluid conduit connection system (108) of claim 1, the bearing assembly (112) further comprising:
a bracket (122) configured to receive the bearing element stack (114); and
a second member (118) disposed between the bracket (122) and the bearing element stack (114).

4. The fluid conduit connection system (108) of claim 1, further comprising:
a flexible conduit (110) connected to a first end of the bearing pipe (120);
wherein a second end of the bearing pipe (120) is configured to receive a tension force (236).

5. The fluid conduit connection system (108) of claim 4, wherein the center of rotation (172) is located closer to the first end of the bearing pipe (120) than the second end of the bearing pipe (120).

6. The fluid conduit connection system (108) of claim 1, wherein the center of rotation (172) is coincident with a central axis (132) of the bearing pipe (120).

7. The fluid conduit connection system (108) of claim 1, wherein the bearing pipe (120) further comprises a continuous inner wall.

8. The fluid conduit connection system (108) of claim 7, wherein the continuous inner wall extends longitudinally through an entire longitudinal length of the bearing element stack (114).

9. A fluid conduit connection method, comprising:
providing a bearing pipe (120) including a continuous inner wall that defines a flow path (164);
providing a tension force (236) to a tension end (128) of the bearing pipe (120);
disposing at least one bearing element stack (114) external to the bearing pipe (120) and annularly about the bearing pipe (120);
transferring at least a portion of the tension force (236) to the at least one bearing element stack (114);
wherein the bearing pipe (120) is allowed to move about a centre of rotation (172) as a function of asymmetrical compression of the at least one bearing element stack (114); and
wherein the bearing element stack (114) comprises:
a plurality of flexible elements (176); and
a plurality of intermediate shims (178) disposed between adjacent flexible elements (176),
**characterised in that** the bearing element stack (114) further comprises:
an upper bonding shim (180); and
a lower bonding shim (182).

10. The method of claim 9, further comprising:
transferring at least a portion of the tension force (236) to a support structure (104) via a bracket (122) configured to retain the bearing element stack (114) relative to the support structure (104).

11. The method of claim 9, wherein the location of the center of rotation (172) is determined as a function of the shape of the bearing element stack (114).

12. The method of claim 9, wherein the center of rotation (172) is coincident with a central axis (132) of the bearing pipe (120).

13. The method of claim 12, wherein the center of rotation (172) is located longitudinally along the central axis (132) of the bearing pipe (120) at a location exterior to an aperture of the bearing element stack (114).

14. The method of claim 9, wherein the bearing element stack (114) is configured to allow rotation of the bearing pipe (120) relative to the bearing element stack (114) about a central axis (132) of the bearing pipe (120) by elastically deforming the bearing element stack (114).

15. The method of claim 9, wherein the tension force (236) is provided to the bearing pipe (120) from a riser (102).

16. The method of claim 9, wherein the center of rotation (172) is located nearer an end of the bearing pipe (120) opposite the tension end (128) than the tension end (128).

## Patentansprüche

1. Ein Fluidleitungsverbindungssystem (108), beinhaltend:
eine Lageranordnung (112), umfassend:
ein Lagerrohr (120) mit einem Fluidfließweg (164); und
einen Lagerelementstapel (114), der sich außerhalb des Lagerrohrs (120) befindet und im Wesentlichen ringförmig um das Lagerrohr (120) angeordnet ist;
wobei der Lagerelementstapel (114) konfiguriert ist, um von dem Lagerrohr (120) eine Druckkraft zu erhalten;
wobei der Lagerelementstapel (114) konfiguriert ist, um die Drehung des Lagerrohrs (120) um einen Drehpunkt (172) der Lageranordnung (112) zu ermöglichen; und wobei der Lagerelementstapel (114) Folgendes beinhaltet:
eine Vielzahl von biegsamen Elementen (176); und
eine Vielzahl von dazwischenliegenden Zwischenstücken (178), die zwischen benachbarten biegsamen Elementen (176) angeordnet sind,
**dadurch gekennzeichnet, dass** der Lagerelementstapel (114) ferner Folgendes beinhaltet:
ein oberes Bindungs-Zwischenstück (180); und
ein unteres Bindungs-Zwischenstück (182).

2. Fluidleitungsverbindungssystem (108) gemäß Anspruch 1, wobei die Lageranordnung (112) ferner ein erstes Bauteil (116, 304) beinhaltet, das zwischen dem Lagerrohr (120) und dem Lagerelementstapel (114) angeordnet ist.

3. Fluidleitungsverbindungssystem (108) gemäß Anspruch 1, wobei die Lageranordnung (112) ferner Folgendes beinhaltet:
eine Halterung (122), die konfiguriert ist, um den Lagerelementstapel (114) aufzunehmen; und
ein zweites Bauteil (118), das zwischen der Halterung (122) und dem Lagerelementstapel (114) angeordnet ist.

4. Fluidleitungsverbindungssystem (108) gemäß Anspruch 1, das ferner Folgendes beinhaltet:
eine biegsame Leitung (110), die mit einem ersten Ende des Lagerrohrs (120) verbunden ist;
wobei ein zweites Ende des Lagerrohrs (120) konfiguriert ist, um eine Zugkraft (236) zu erhalten.

5. Fluidleitungsverbindungssystem (108) gemäß Anspruch 4, wobei sich der Drehpunkt (172) näher an dem ersten Ende des Lagerrohrs (120) als dem zweiten Ende des Lagerrohrs (120) befindet.

6. Fluidleitungsverbindungssystem (108) gemäß Anspruch 1, wobei der Drehpunkt (172) mit einer Mittelachse (132) des Lagerrohrs (120) zusammenfällt.

7. Fluidleitungsverbindungssystem (108) gemäß Anspruch 1, wobei das Lagerrohr (120) ferner eine kontinuierliche Innenwand beinhaltet.

8. Fluidleitungsverbindungssystem (108) gemäß Anspruch 7, wobei sich die kontinuierliche Innenwand durch eine gesamte longitudinale Länge des Lagerelementstapels (114) longitudinal erstreckt.

9. Ein Fluidleitungsverbindungsverfahren, beinhaltend:
Bereitstellen eines Lagerrohrs (120), das eine kontinuierliche Innenwand umfasst, welche einen Fließweg (164) definiert;
Aufbringen einer Zugkraft (236) an ein Zugende (128) des Lagerrohrs (120);
Anordnen mindestens eines Lagerelementstapels (114) außerhalb des Lagerrohrs (120) und ringförmig um das Lagerrohr (120);
Übertragen mindestens eines Teils der Zugkraft (236) auf den mindestens einen Lagerelementstapel (114);
wobei sich das Lagerrohr (120) als eine Funktion einer asymmetrischen Komprimierung des mindestens einen Lagerelementstapels (114) um einen Drehpunkt (172) bewegen kann; und
wobei der Lagerelementstapel (114) Folgendes beinhaltet:
eine Vielzahl von biegsamen Elementen (176); und
eine Vielzahl von dazwischenliegenden Zwischenstücken (178), die zwischen benachbarten biegsamen Elementen (176) angeordnet sind,
**dadurch gekennzeichnet, dass** der Lagerelementstapel (114) ferner Folgendes beinhaltet:
ein oberes Bindungs-Zwischenstück (180); und
ein unteres Bindungs-Zwischenstück (182).

10. Verfahren gemäß Anspruch 9, das ferner Folgendes beinhaltet:
Übertragen mindestens eines Teils der Zugkraft (236) auf eine Stützstruktur (104) über eine Halterung (122), die konfiguriert ist, um den Lagerelementstapel (114) relativ zu der Stützstruktur (104) festzuhalten.

11. Verfahren gemäß Anspruch 9, wobei die Position des Drehpunkts (172) als eine Funktion der Form des Lagerelementstapels (114) bestimmt wird.

12. Verfahren gemäß Anspruch 9, wobei der Drehpunkt (172) mit einer Mittelachse (132) des Lagerrohrs (120) zusammenfällt.

13. Verfahren gemäß Anspruch 12, wobei sich der Drehpunkt (172) longitudinal entlang der Mittelachse (132) des Lagerrohrs (120) in einer Position außerhalb einer Öffnung des Lagerelementstapels (114) befindet.

14. Verfahren gemäß Anspruch 9, wobei der Lagerelementstapel (114) konfiguriert ist, um durch elastisches Verformen des Lagerelementstapels (114) die Drehung des Lagerrohrs (120) relativ zu dem Lagerelementstapel (114) um eine Mittelachse (132) des Lagerrohrs (120) zu ermöglichen.

15. Verfahren gemäß Anspruch 9, wobei die Zugkraft (236) von einer Steigeleitung (102) auf das Lagerrohr (120) aufgebracht wird.

16. Verfahren gemäß Anspruch 9, wobei sich der Drehpunkt (172) näher an einem Ende des Lagerrohrs (120) gegenüber dem Zugende (128) als am Zugende (128) befindet.

## Revendications

1. Un système de raccordement de conduits de fluides (108), comprenant :
un ensemble de palier (112), comportant :
un tube de palier (120) présentant une voie d'écoulement de fluide (164) ; et
une pile d'éléments de palier (114) située à l'extérieur du tube de palier (120) et
disposée de manière substantiellement annulaire autour du tube de palier (120) ;
dans lequel la pile d'éléments de palier (114) est configurée afin de recevoir une force de compression provenant du tube de palier (120) ;
dans lequel la pile d'éléments de palier (114) est configurée afin d'autoriser la rotation du tube de palier (120) autour d'un centre de rotation (172) de l'ensemble de palier (112) ; et
dans lequel la pile d'éléments de palier (114) comprend :
une pluralité d'éléments flexibles (176) ; et
une pluralité de cales intermédiaires (178) disposées entre des éléments flexibles (176) adjacents,
**caractérisé en ce que** la pile d'éléments de palier (114) comprend en sus :
une cale de liaison supérieure (180) ; et
une cale de liaison inférieure (182).

2. Le système de raccordement de conduits de fluides (108) de la revendication 1, l'ensemble de palier (112) comprenant en sus un premier organe (116, 304) disposé entre le tube de palier (120) et la pile d'éléments de palier (114).

3. Le système de raccordement de conduits de fluides (108) de la revendication 1, l'ensemble de palier (112) comprenant en sus :
une console (122) configurée afin de recevoir la pile d'éléments de palier (114) ; et
un deuxième organe (118) disposé entre la console (122) et la pile d'éléments de palier (114).

4. Le système de raccordement de conduits de fluides (108) de la revendication 1, comprenant en sus :
un conduit flexible (110) raccordé à une première extrémité du tube de palier (120) ;
dans lequel une deuxième extrémité du tube de palier (120) est configurée afin de recevoir un effort de tension (236).

5. Le système de raccordement de conduits de fluides (108) de la revendication 4, dans lequel le centre de rotation (172) est situé plus près de la première extrémité du tube de palier (120) que de la deuxième extrémité du tube de palier (120).

6. Le système de raccordement de conduits de fluides (108) de la revendication 1, dans lequel le centre de rotation (172) coïncide avec un axe central (132) du tube de palier (120).

7. Le système de raccordement de conduits de fluides (108) de la revendication 1, dans lequel le tube de palier (120) comprend en sus une paroi interne continue.

8. Le système de raccordement de conduits de fluides (108) de la revendication 7, dans lequel la paroi interne continue s'étend longitudinalement à travers une longueur longitudinale tout entière de la pile d'éléments de palier (114).

9. Une méthode de raccordement de conduits de fluides, comprenant :
le fait de fournir un tube de palier (120) comportant une paroi interne continue qui définit une voie d'écoulement (164) ;
le fait de fournir un effort de tension (236) sur une extrémité de tension (128) du tube de palier (120) ;
le fait de disposer au moins une pile d'éléments de palier (114) de manière externe par rapport au tube de palier (120) et de manière annulaire autour du tube de palier (120) ;
le fait de transférer au moins une portion de l'effort de tension (236) sur l'au moins une pile d'éléments de palier (114) ;
dans laquelle le tube de palier (120) est autorisé à se déplacer autour d'un centre de rotation (172) en fonction d'une compression asymétrique de l'au moins une pile d'éléments de palier (114) ; et
dans laquelle la pile d'éléments de palier (114) comprend :
une pluralité d'éléments flexibles (176) ; et
une pluralité de cales intermédiaires (178) disposées entre des éléments flexibles (176) adjacents,
**caractérisée en ce que** la pile d'éléments de palier (114) comprend en sus :
une cale de liaison supérieure (180) ; et
une cale de liaison inférieure (182).

10. La méthode de la revendication 9, comprenant en sus :
le fait de transférer au moins une portion de l'effort de tension (236) sur une structure de support (104) via une console (122) configurée afin de retenir la pile d'éléments de palier (114) relativement à la structure de support (104).

11. La méthode de la revendication 9, dans laquelle l'emplacement du centre de rotation (172) est déterminé en fonction de la forme de la pile d'éléments de palier (114).

12. La méthode de la revendication 9, dans laquelle le centre de rotation (172) coïncide avec un axe central (132) du tube de palier (120).

13. La méthode de la revendication 12, dans laquelle le centre de rotation (172) est situé longitudinalement le long de l'axe central (132) du tube de palier (120) au niveau d'un emplacement à l'extérieur d'une ouverture de la pile d'éléments de palier (114).

14. La méthode de la revendication 9, dans laquelle la pile d'éléments de palier (114) est configurée afin d'autoriser la rotation du tube de palier (120) relativement à la pile d'éléments de palier (114) autour d'un axe central (132) du tube de palier (120) par déformation élastique de la pile d'éléments de palier (114).

15. La méthode de la revendication 9, dans laquelle l'effort de tension (236) est fourni sur le tube de palier (120) depuis un riser (102).

16. La méthode de la revendication 9, dans laquelle le centre de rotation (172) est situé plus près d'une extrémité du tube de palier (120) opposée à l'extrémité de tension (128) que de l'extrémité de tension (128).
